(19) Europäisches Patentamt / European Patent Office / Office européen des brevets

(11) EP 4 613 365 A1

(12) EUROPEAN PATENT APPLICATION

(43) Date of publication:
**10.09.2025 Bulletin 2025/37**

(21) Application number: **24382242.6**

(22) Date of filing: **06.03.2024**

(51) International Patent Classification (IPC):
***B01D 71/68** (2006.01)* ***B01D 53/22** (2006.01)*
***B01D 71/82** (2006.01)*

(52) Cooperative Patent Classification (CPC):
**B01D 71/68; B01D 53/228; B01D 71/06; B01D 71/82;** B01D 2323/226

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Fundació Eurecat**
  **08290 Cerdanyola del Vallès (ES)**
- **Fondazione Istituto Italiano di Tecnologia**
  **16163 Genova (IT)**
- **Ionic Liquids Technologies GmbH**
  **74076 Heilbronn (DE)**

(72) Inventors:
- **NOGALSKA, Adrianna**
  **43007 TARRAGONA (ES)**
- **DOMINGO HUGUET, David**
  **43007 TARRAGONA (ES)**
- **BOCCHINI, Sergio**
  **12045 FOSSANO (CN) (IT)**
- **LETTIERI, Stefania**
  **18033 CAMPOROSSO (IM) (IT)**
- **FERRARO, Giuseppe**
  **97100 RAGUSA (RG) (IT)**
- **ILIEV, Boyan**
  **74076 HEILBRONN (DE)**
- **SCHUBERT, Thomas**
  **74206 BAD WIMPFEN (DE)**

(74) Representative: **ZBM Patents - Zea, Barlocci & Markvardsen**
**Rambla de Catalunya, 123**
**08008 Barcelona (ES)**

# (54) MEMBRANES WITH IONIC LIQUIDS FOR CO2 CAPTURE AND DEVICES FOR GAS SEPARATION COMPRISING THEM

(57) It relates to polymeric membranes and devices comprising them, useful for $CO_2$ capture, the membrane comprising: a) an ionic liquid; and b) a combination of unmodified polysulfone and a modified polysulfone in a weight ratio from 10:1 to 1:1; where the modified polysulfone is a polysulfone functionalized with at least a cation of an ionic liquid chemically bonded into a side chain of the polysulfone; as well as to a process for capturing $CO_2$ comprising contacting an initial gas mixture comprising carbon dioxide in a concentration up to 80% by weight with the polymeric membrane under conditions such as to obtain a gas product which has a higher weight percentage of $CO_2$ than the original gas mixture and permeates through the membrane.

EP 4 613 365 A1

## Description

### Technical Field

The present invention relates to the field of polymeric membranes with ionic liquid functional groups introduced into the side chains of the polymer, their manufacturing methods, their use for capturing carbon dioxide, as well as devices comprising them.

### Background Art

The importance of capturing carbon dioxide ($CO_2$) in the current era is multifaceted and deeply tied to environmental, economic, and social concerns.

Capturing carbon dioxide ($CO_2$) is essential in addressing climate change, protecting ecosystems, and aiding the transition to sustainable energy. By reducing $CO_2$ emissions, a major greenhouse gas, this technology mitigates global warming and environmental issues like ocean acidification, while also complying with international agreements like the Paris Agreement. Additionally, $CO_2$ capture plays a crucial role in public health by decreasing other pollutants. As the world still relies on fossil fuels, $CO_2$ capture technologies offer a viable, interim solution, facilitating a more responsible and sustainable use of these resources until renewable energy fully takes over.

Previous studies have demonstrated positive sorption results with the method of embedding Supported Ionic Liquids (SILs) within a polysulfone (PSF) polymeric matrix for $CO_2$ capture. Building on this foundation, D. Huguet et al.;" Supported Imidazolium Based Ionic Liquids on a Polysulfone Matrix for Enhanced CO2 Capture", Polymers 2022, vol. 14, p. 4865 refers to the synthesis of diverse ionic liquids (ILs), specifically focusing on combinations of 1-butyl-3-methylimidazolium (BMI) cations paired with various anions (BMI.X). These IL formulations have then been integrated into a porous polymer matrix to create SILs, optimized for enhanced $CO_2$ sorption efficiency. However, this type of membranes based on adsorption may suffer from stability issues due to the fact that the ionic liquid may leach out of the membrane at a low pressure differential. Therefore, they may not be appropriate for certain applications such as photoelectrocatalysis.

To address the previous problem, KR20140100048A proposes a polymer membrane in which an ionic liquid functional group is introduced to a side of a polymer such as styrene, polyacrylate, polyether ketone, polysulfone, and polyimide. The document only exemplifies a membrane of polyether ketone which shows high $CO_2/N_2$ and $O_2/N_2$ permeability and carbon dioxide solubility.

Despite the development of supported ionic liquid systems to be used as membranes is known in the art, there is a recognized need in the field to provide new materials that enhance $CO_2$ capture efficiency and at the same time exhibits good mechanical strength.

### Summary of Invention

The present inventors provide a membrane which base is a polysulfone, to which an ionic liquid is functionalized, and subsequently such modified polysulfone is combined with unmodified polysulfone, and an ionic liquid. This forms a membrane that is both mechanically consistent and functional, providing high efficiency and effectiveness of $CO_2$ capture.

Despite ionic liquid polymeric membranes have been disclosed in KR20140100048 as being able to capture higher carbon dioxide than supported ionic liquid membranes and also as having higher stability, the attempts by the present inventors to functionalize a polysulfone with ionic liquids, resulted in a membrane which is mechanically inconsistent.

However, the present inventors found that a mechanically consistent membrane can be obtained by combining an ionic liquid functionalized polysulfone with unmodified polysulfone in a certain ratio to provide a novel material useful for gas separation, offering a robust solution, and effectively addressing and resolving this previously encountered mechanical inconsistencies, while simultaneously ensuring the performance and reliability.

Thus, a first aspect of the present invention relates to a polymeric membrane comprising: a) an ionic liquid of formula [A][X] wherein: the cation [A] is selected from the group consisting of imidazolium, ($C_1$-$C_{20}$)-alkyl imidazolium, benzimidazolium, ($C_1$-$C_{20}$)-alkyl benzimidazolium, triazolium, ($C_1$-$C_{20}$)-alkyl triazolium, benzotriazolium, ($C_1$-$C_{20}$)-alkyl benzotriazolium, tetrazolium, ($C_1$-$C_{20}$)-alkyl tetrazolium, and; and the anion [X] is selected from the group consisting of succinimidate, phthalimidate, maleimidate, saccharinate, glutarimidate, halogen, ($C_1$-$C_{20}$)-alkanoate, argininate, lysinate, histidinate, dicyanamide, tricyanomethide, bis (perfluoroalkylsulfonyl)imide, formiate, pyvalate, benzoate, prolinate, imidazolate, mesylate, triflate, oxalate, malonate, succinate, hexafluorophosphate, bis(trifluoromethylsulfonyl)imide, tetrafluoroborate, trifluoromethanesulfonate, dicyanamide, methyl sulfate, dimethyl phosphate, and acetate and b) a combination of unmodified polysulfone and a modified polysulfone; where the modified polysulfone is a polysulfone functionalized with at least a cation of an ionic liquid chemically bonded into a side chain of the polysulfone which is independently selected from the group consisting of imidazolium, ($C_1$-$C_{20}$)-alkyl imidazolium, benzimidazolium,

($C_1$-$C_{20}$)-alkyl benzimidazolium, triazole, ($C_1$-$C_{20}$)-alkyl triazolium, benzotriazolium, ($C_1$-$C_{20}$)-alkylbenzotriazolium, tetrazolium, ($C_1$-$C_{20}$)-alkyl tetrazolium, benzotetrazolium, and ($C_1$-$C_{20}$)-alkyl benzotetrazolium and having an anion [Y] which is independently selected from the group consisting of succinimidate, phthalimidate, maleimidate, saccharinate, glutarimidate, halogen, ($C_1$-$C_{20}$)-alkanoate, argininate, lysinate, histidinate, dicyanamide, tricyanomethide, bis (perfluoroalkylsulfonyl)imide, formiate, pyvalate, benzoate, prolinate, imidazolate, mesylate, triflate, oxalate, malonate, succinate, hexafluorophosphate, bis(trifluoromethylsulfonyl)imide, tetrafluoroborate, trifluoromethanesulfonate, dicyanamide, methyl sulfate, dimethyl phosphate, and acetate, and the unmodified polysulfone and the modified polysulfone are in a weight ratio from 10:1 to 1:1 in the polymeric membrane.

A second aspect of the present invention relates to a process for preparing the polymeric membrane as defined above, comprising the following steps: a) Preparing a polymeric solution comprising: an unmodified polysulfone, a modified polysulfone, an ionic liquid, each of them as defined above, and a solvent; b) Casting the solution over a support which is selected from the group consisting of glass support, and Teflon sheet; and c) Evaporating the solvent, thereby forming a thin film over the support.

A third aspect of the present invention relates to a process for capturing $CO_2$ comprising contacting an initial gas mixture comprising carbon dioxide in a concentration up to 80% by weight with a polymeric membrane as defined above, under conditions such as to obtain a gas product which has a higher weight percentage of $CO_2$ than the original gas mixture and that permeates through the membrane and a gas retentate which has a lower weight percentage of $CO_2$ than the original gas mixture, which does not permeate through the membrane.

The membrane can be used in different types of equipment designed for gas separation, regardless of their specific design or operational parameters. The membrane facilitates the separation process as the mixed gas enters the device, allowing the $CO_2$ gas to permeate through it while retaining other components in the mixture. Accordingly, a fourth aspect of the present invention relates to an equipment designed for gas separation comprising the polymeric membrane as defined above.

## Brief Description of Drawings

FIG. 1 shows the mechanically stability of membrane with different ratios of modified and unmodified polysulfone.

## Detailed description of the invention

All terms as used herein in this application, unless otherwise stated, shall be understood in their ordinary meaning as known in the art. Other more specific definitions for certain terms as used in the present application are as set forth below and are intended to apply throughout the description and claims.

As used herein, the indefinite articles "a" and "an" are synonymous with "at least one" or "one or more." Thus, as used herein, the singular forms "a", "an", and also the definite article "the" include plural referents unless the context clearly dictates otherwise".

As used herein, the terms "comprise", "comprises", "comprising", "include", "includes", and "including" are meant to be non-limiting, i.e., they are used to specify the presence of the stated components but do not preclude the presence of additional components, unless the contrary is specifically stated. These terms also include the term "consisting essentially of" or "consisting of".

Unless indicated otherwise, the percentages (%) used in the present description refer to weight percentages (weight/weight, w/w).

The term room temperature (RT) as used herein refers to room temperature, which is in a range between 20°C and 25°C.

The term "ionic liquids, (ILs)" refers to salts with a melting point below 100° C, often below room temperature. The ionic liquids used for the purposes of the present invention are ionic liquids that are suitable for polymerization of the ionic liquid monomers into a polysulfone. Most common examples are imidazolium and pyridinium derivatives.

The term "halogen" means any of F, Cl, Br, and I.

As mentioned above, one aspect of the present invention relates to a polymeric membrane comprising: a) an ionic liquid of formula [A][X] wherein: the cation [A] is selected from the group consisting of imidazolium, ($C_1$-$C_{20}$)-alkyl imidazolium, benzimidazolium, ($C_1$-$C_{20}$)-alkyl benzimidazolium, triazolium, ($C_1$-$C_{20}$)-alkyl triazolium, benzotriazolium, tetrazolium, ($C_1$-$C_{20}$)-alkyl tetrazolium, and benzotetrazolium; and the anion [X] is selected from the group consisting of succinimidate, phthalimidate, maleimidate, saccharinate, glutarimidate, halogen, ($C_1$-$C_{20}$)-alkanoate, argininate, lysinate, histidinate, dicyanamide, tricyanomethide, bis (perfluoroalkylsulfonyl)imide, formiate, pyvalate, benzoate, prolinate, imidazolate, mesylate, triflate, oxalate, malonate, succinate, hexafluorophosphate, bis(trifluoromethylsulfonyl)imide, tetrafluoroborate, trifluoromethanesulfonate, dicyanamide, methyl sulfate, dimethyl phosphate, and acetate; and b) a combination of unmodified polysulfone and a modified polysulfone; where the modified polysulfone is a polysulfone functionalized with at least a cation of an ionic liquid chemically bonded into a side chain of the polysulfone which is

independently selected from the group consisting of imidazolium, ($C_1$-$C_{20}$)-alkyl imidazolium, benzimidazolium, ($C_1$-$C_{20}$)-alkyl benzimidazolium, triazole, ($C_1$-$C_{20}$)-alkyl triazolium, benzotriazolium, tetrazolium, ($C_1$-$C_{20}$)-alkyl tetrazolium, and benzotetrazolium, and having an anion [Y] which is independently selected from the group consisting of succinimidate, phthalimidate, maleimidate, saccharinate, glutarimidate, halogen, ($C_1$-$C_{20}$)-alkanoate,argininate, lysinate, histidinate, dicyanamide, tricyanomethide, bis (perfluoroalkylsulfonyl)imide, formiate, pyvalate, benzoate, prolinate, imidazolate, mesylate, triflate, oxalate, malonate, succinate, hexafluorophosphate, bis(trifluoromethylsulfonyl)imide, tetrafluoroborate, trifluoromethanesulfonate, dicyanamide, methyl sulfate, dimethyl phosphate, and acetate; and the unmodified polysulfone and the modified polysulfone are in a weight ratio from 10:1 to 1:1 in the polymeric membrane. The at least a cation of an ionic liquid chemically bonded into a side chain of the polysulfone is also named herein [A']. The combination of unmodified polysulfone and a modified polysulfone may be a mixture of unmodified polysulfone and a modified polysulfone.

In a particular embodiment, a polymeric membrane comprising: a) an ionic liquid of formula [A][X] wherein: the cation [A] is selected from the group consisting of imidazolium, ($C_1$-$C_{20}$)-alkyl imidazolium, benzimidazolium, ($C_1$-$C_{20}$)-alkyl benzimidazolium, triazolium, ($C_1$-$C_{20}$)-alkyl triazolium, benzotriazolium, ($C_1$-$C_{20}$)-alkyl benzotriazolium, tetrazolium, ($C_1$-$C_{20}$)-alkyl tetrazolium, and; and the anion [X] is selected from the group consisting of succinimidate, halogen, ($C_1$-$C_{20}$)-alkanoate, argininate, lysinate, histidinate, dicyanamide, tricyanomethide, and, bis (perfluoroalkylsulfonyl)imide and b) a combination of unmodified polysulfone and a modified polysulfone; where the modified polysulfone is a polysulfone functionalized with at least a cation of an ionic liquid chemically bonded into a side chain of the polysulfone which is independently selected from the group consisting of imidazolium, ($C_1$-$C_{20}$)-alkyl imidazolium, benzimidazolium, ($C_1$-$C_{20}$)-alkyl benzimidazolium, triazole, ($C_1$-$C_{20}$)-alkyl triazolium, benzotriazolium, ($C_1$-$C_{20}$)-alkylbenzotriazolium, tetrazolium, ($C_1$-$C_{20}$)-alkyl tetrazolium, and benzotetrazolium, ($C_1$-$C_{20}$)-alkyl benzotetrazolium and having an anion [Y] which is independently selected from the group consisting of succinimidate, halogen, ($C_1$-$C_{20}$)-alkanoate, argininate, lysinate, histidinate, dicyanamide, tricyanomethide, and, bis (perfluoroalkylsulfonyl)imide; and the unmodified polysulfone and the modified polysulfone are in a weight ratio from 10:1 to 1:1 in the polymeric membrane.

In a particular embodiment, in combination with any of the embodiments above or below, the degree of functionalization of the modified polysulfone is up to 40% by weight. In another particular embodiment, in combination with any of the embodiments above or below, the degree of functionalization of the modified polysulfone is up to 30% by weight. In another particular embodiment, the degree of functionalization is a value in a range from 20 to 60% by weight. In another particular embodiment, the degree of functionalization is a value in a range from 25 to 50% by weight. In another particular embodiment, the degree of functionalization is a value in a range from 30 to 40% by weight. The degree of functionalization can be measured by thermal gravimetric analysis.

In a particular embodiment, in combination with any of the embodiments above or below, the cation of the not chemically bound ionic liquid in the polymeric membrane is selected from a ($C_1$-$C_{20}$)-alkyl imidazolium, and a ($C_1$-$C_{20}$)-alkyl benzimidazolium. In another particular embodiment, the cation of the free ionic liquid in the polymeric membrane is selected from a ($C_1$-$C_{10}$)-alkyl imidazolium, and a ($C_1$-$C_{10}$)-alkyl benzimidazolium. In a particular embodiment, the cation of the not chemically bound ionic liquid in the polymeric membrane is selected from a ($C_4$-$C_8$)-alkyl imidazolium, and a ($C_4$-$C_8$)-alkyl benzimidazolium. In another particular embodiment, the cation of the not chemically bound ionic liquid in the polymeric membrane is selected from the group consisting of 1-butylimidazolium, 1-octylimidazolium, 1-octyl-1H-benzimidazolium, and N-butyl-1H-benzimidazolium. Example of cations of the not chemically bound ionic liquid are 1-butyllmidazolium, 1-octyllmidazolium, 1-octyl-1H-benzimidazolium, and N-butyl-1H-benzimidazolium.

In another particular embodiment, the ($C_1$-$C_4$)-alkanoate in the anion [X] of the not chemically bound ionic liquid is selected from the group consisting of pivalate and formiate. In another particular embodiment, the halogen in the anion [X] of the not chemically bound ionic liquid is selected from the group consisting of chloride and bromide.

In a particular embodiment, in combination with any of the embodiments above or below, the cation of the ionic liquid chemically bonded into a side chain of the modified polysulfone of the polymeric membrane is independently selected from a ($C_1$-$C_{20}$)-alkyl imidazolium, and a ($C_1$-$C_{20}$)-alkyl benzimidazolium. In another particular embodiment, the cation of the ionic liquid chemically bonded into a side chain of the polysulfone is independently selected from a ($C_1$-$C_{10}$)-alkyl imidazolium, and a ($C_1$-$C_{10}$)-alkyl benzimidazolium. In another particular embodiment, the cation of the ionic liquid chemically bonded into a side chain of the polysulfone is independently selected from a ($C_4$-$C_8$)-alkyl imidazolium, and a ($C_4$-$C_8$)-alkyl benzimidazolium. In another particular embodiment, the cation of the ionic liquid which is chemically bonded to the polysulfone is independently selected from the group consisting of 1-butylimidazolium, 1-octylimidazolium,1-octyl-1H-benzimidazolium, and N-butyl-1H-benzimidazolium.

In another particular embodiment, in combination with any of the embodiments above or below, the ($C_1$-$C_4$)-alkanoate in the anion [Y] of the polymeric membrane is independently selected from the group consisting of pivalate and formiate. In another particular embodiment, the halogen in the anion [Y] of the polymeric membrane is selected from the group consisting of chloride and bromide.

In a particular embodiment, in combination with any of the embodiments above or below, the polymeric membrane of the present invention is that where the unmodified polysulfone has an average molecular weight from

20.000 to 60.000. In another particular embodiment, the polymeric membrane is that where the unmodified polysulfone has an average molecular weight from 22.000 to 40.000. In another particular embodiment, the polymeric membrane as defined above is that where the unmodified polysulfone has an average molecular weight of 35.000. The average molecular weight is measured by gel permeation chromatography (GPC) together with mass spectrometry (MALDI TOF-MS).

In a particular embodiment, in combination with any of the embodiments above or below, the polymeric membrane as defined above is that where the unmodified polysulfone comprises the following polymeric unit:

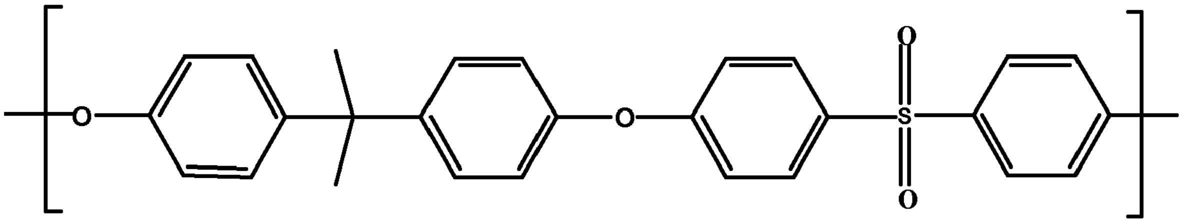

In a particular embodiment, in combination with any of the embodiments above or below, the polymeric membrane of the present invention is that where the modified polysulfone has an average molecular weight from 20.000 to 70.000. In another particular embodiment, in combination with any of the embodiments above or below, the polymeric membrane of the present invention is that where the modified polysulfone has an average molecular weight from 20.000 to 60.000. In another particular embodiment, the polymeric membrane is that where the modified polysulfone has an average molecular weight from 22.000 to 40.000. In another particular embodiment, the polymeric membrane as defined above is that where the modified polysulfone has an average molecular weight of 35.000.

The average molecular weight is measured by gel permeation chromatography (GPC) together with mass spectrometry (MALDI TOF-MS).

In a particular embodiment, the polymeric membrane of the present invention is that where the modified polysulfone comprises the following polymeric unit:

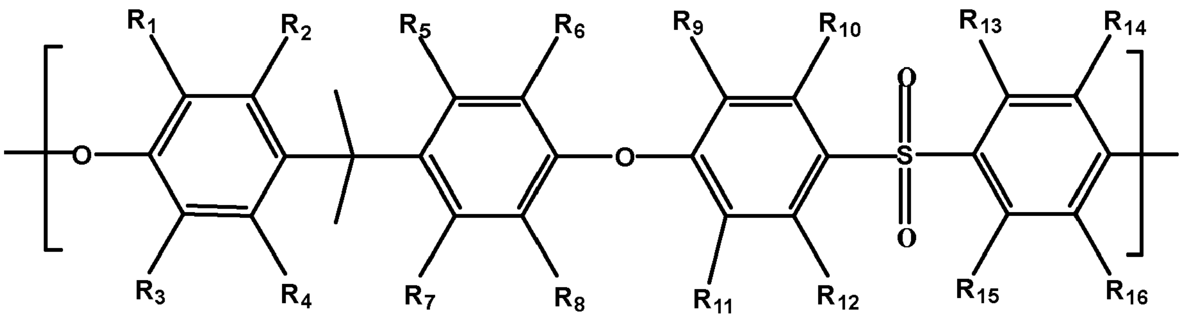

where $R_1$ -$R_{16}$ are independently selected from H and $-(CH_2)_m-R_{17}$, with the proviso that at least one $R_1$ -$R_{16}$ is $-(CH_2)_m-R_{17}{}^+Y$; m is an integer from 1 to 2; $R_{17}{}^+$ is the cation of the ionic liquid which is chemically bonded into the side chain of the polysulfone through the $-(CH_2)_m$ and which is independently selected from the group consisting of imidazolium, ($C_1$-$C_{20}$)-alkyl imidazolium, benzimidazolium, ($C_1$-$C_{20}$)-alkyl benzimidazolium, triazolium, ($C_1$-$C_{20}$)-alkyl triazolium, benzotriazolium, tetrazolium, ($C_1$-$C_{20}$)-alkyl tetrazolium, and benzotetrazolium, and $Y^-$ is the anion which is independently selected from the group consisting of a succinimidate, halogen, ($C_1$-$C_4$)-alkanoate, prolinate, and malonate.

As mentioned above, the degree of functionalization of the modified polysulfone is up to 40% by weight. In a particular embodiment, in combination with any of the embodiments above or below, the modified polysulfone is that where from two to six of the $R_1$-$R_{16}$ are $-(CH_2)_m-R_{17}{}^+Y$. In another particular embodiment, the modified polysulfone is that where two of the $R_1$-$R_{16}$ are $-(CH_2)_m-R_{17}{}^+Y$. In another particular embodiment, the modified polysulfone is that where three of the $R_1$-$R_{16}$ are $-(CH_2)_m-R_{17}{}^+Y$. In another particular embodiment, the modified polysulfone is that where fourth of the $R_1$-$R_{16}$ are $-(CH_2)_m-R_{17}{}^+Y$. In another particular embodiment, the modified polysulfone is that where fifth of the $R_1$-$R_{16}$ are $-(CH_2)_m-R_{17}{}^+Y$. In another particular embodiment, the modified polysulfone is that where all the $R_1$-$R_{16}$ are $-(CH_2)_m-R_{17}{}^+Y$, i.e., all are functionalized.

In another particular embodiment, in combination with any of the embodiments above or below, the modified polysulfone of the polymeric membrane is that where $R_{17}{}^+$ is independently selected from a ($C_1$-$C_{20}$)-alkyl imidazolium, and a ($C_1$-$C_{20}$)-alkyl benzimidazolium. In another particular embodiment, the modified polysulfone is that where $R_{17}{}^+$ is independently selected from a ($C_1$-$C_{10}$)-alkyl imidazolium, and a ($C_1$-$C_{10}$)-alkyl benzimidazolium. In a particular embodiment, the modified polysulfone is that where where $R_{17}^+$ is independently selected from a ($C_4$-$C_8$)-alkyl imidazolium, and a ($C_4$-$C_8$)-alkyl benzimidazolium. In another particular embodiment, the modified polysulfone is that where $R_{17}^+$ is selected from the group consisting of 1-butylimidazolium, 1-octylimidazolium, 1-octyl-1H-benzimidazolium, and N-butyl-1H-benzimidazolium.

In another particular embodiment, the modified polysulfone of the polymeric membrane is that where m is 1.

In a particular embodiment, in combination with any of the embodiments above or below the polymeric membrane of the present invention is that where the not chemically bound ionic liquid is in an amount from 5 to 45 wt.%, based on the total weight of the polymeric membrane; where the amount of the ionic liquid; and of the combination of unmodified polysulfone and a modified polysulfone sum 100%. In another particular embodiment, the polymeric membrane is that where the not chemically bound ionic liquid is in an amount from 10 to 20 wt.%, based on the total weight of the polymeric membrane; where the amount of the ionic liquid; and of the combination of unmodified polysulfone and a modified polysulfone sum 100%.

In a particular embodiment, in combination with any of the embodiments above or below, the polymeric membrane according to the invention is that where the unmodified polysulfone and the modified polysulfone are in a weight ratio from 5:1 to 2:1 in the polymeric membrane. In another particular embodiment, the polymeric membrane is that where the unmodified polysulfone and the modified polysulfone are in a weight ratio of 3:1 in the polymeric membrane. These ratios correspond to the ratio between the amount of unmodified polysulfone and modified polysulfone used to prepare the polymeric membrane.

In a particular embodiment, in combination with any of the embodiments above or below, the polymeric membrane of the present invention is that where unmodified polysulfone/modified polysulfone/ionic liquid are in a weight ratio from 6:1:1 to 2:1:1 in the polymeric membrane. In another particular embodiment, the polymeric membrane is that where unmodified polysulfone/modified polysulfone/ionic liquid are in a weight ratio from 4:1:1 to 2:1:1. In another particular embodiment, the polymeric membrane is that where unmodified polysulfone/modified polysulfone/ionic liquid are in a weight ratio of 3:1:1.

In a particular embodiment, in combination with any of the embodiments above or below, the membrane thickness has a value comprised in the range from 50 to 250 $\mu$m measured by ESEM. In another particular embodiment, in combination with any of the embodiments above or below, the membrane thickness has a value comprised in the range from 90 to 130 $\mu$m measured by ESEM.

The parameters that characterize the separation performance of a membrane in a given pair of gases are mainly the permeability coefficient (PA) and permeation selectivity ($\alpha$A / B).

In a particular embodiment, the polymeric membrane of the present invention is that which has a $CO_2$ permeability from 5 to 350 Barrer (x10 $^{-10}$ $cm^3$ (STP) cm/($cm^2$ s cmHg)) analyzed at 30°C, with a pressure between 0.2 to 0.8 bar and using a microbalance system. In another particular embodiment, the polymeric membrane is that which has a $CO_2$ permeability from 30 to 320 Barrer analyzed in the same conditions. In another particular embodiment, the polymeric membrane is that which has a $CO_2$ permeability from 60 to 295 Barrer analyzed in the same conditions.

In another particular embodiment, the polymeric membrane of the present invention is that which has a solubility in $CO_2$ from 0.015 to 0.250 ($cm^3$(STP)/$cm^3$ cmHg) analyzed at 30°C, with pressure between 0.2 to 0.8 bar and using a microbalance system. In another particular embodiment, the polymeric membrane of the present invention is that which has a solubility in $CO_2$ from 0.100 to 0.210 ($cm^3$(STP)/$cm^3$ cmHg) analyzed in the same conditions.

In another particular embodiment, the polymeric membrane of the present invention is that which has a selectivity analyzed at 30°C with pressure between 0.2 to 0.8 bar using a microbalance system from 1.15 to 17.51 Barrer ratio ($\alpha$) expressed as Permeability to $CO_2$ on Permeability to $N_2$.

In a particular embodiment, the polymeric membrane of the present invention is that which has a $N_2$ permeability from 3 to 160 Barrer (x10 $^{-10}$ $cm^3$ (STP) cm/($cm^2$ s cmHg)) analyzed at 30°C, with a pressure between 0.2 to 0.8 bar and using a microbalance system. In another particular embodiment, the polymeric membrane is that which has a $N_2$ permeability from 4 to 135 Barrer analyzed in the same conditions. In another particular embodiment, the polymeric membrane is that which has a $N_2$ permeability from 5 to 115 Barrer analyzed in the same conditions.

In another particular embodiment, the polymeric membrane of the present invention is that which has a solubility in $N_2$ from 0.003 to 0.050 ($cm^3$(STP)/$cm^3$ cmHg) analyzed at 30°C, with pressure between 0.2 to 0.8 bar and using a microbalance system. In another particular embodiment, the polymeric membrane of the present invention is that which has a solubility in $N_2$ from 0.010 to 0.040 ($cm^3$(STP)/$cm^3$ cmHg) analyzed in the same conditions.

It is part of the present invention a process for preparing the polymeric membrane as defined above, comprising the following steps: a) Preparing a polymeric solution comprising: an unmodified polysulfone, a modified polysulfone, an ionic liquid, each of them as defined above, and a solvent; b) Casting the solution over a support which is selected from the group consisting of glass support, and Teflon sheet; and c) Evaporating the solvent, thereby forming a thin film over the support.

In a particular embodiment of the process, the solvent used in step a is selected from the group consisting of N,N-dimethylformamide, N-methyl pyrrolidone, N,N-dimethylacetamide, dimethyl sulfoxide, and chloroform.

In another particular embodiment of the process, it previously comprises preparing the modified polysulfone. The preparation of the modified polysulfones of the present invention is conducted via chloroalkylation and subsequent functionalization by insertion of the cationic group. Thus, the modified polysulfone may be prepared by a process comprising: a) haloalkylating an unmodified polysulfone; and b) reacting the polysulfone obtained in step a) with an liquid ionic of formula [A'][Y] wherein: the cation [A'] is independently selected from the group consisting of imidazolium, ($C_1$-$C_{20}$)-alkyl imidazolium, benzimidazolium, ($C_1$-$C_{20}$)-alkyl benzimidazolium, triazolium, ($C_1$-$C_{20}$)-alkyl triazolium, benzotriazolium, tetrazolium, ($C_1$-$C_{20}$)-alkyl tetrazolium, and benzo tetrazolium; and the anion [Y] is independently selected from the group consisting of succinimidate, halogen, ($C_1$-$C_4$)-alkanoate, prolinate, and malonate, to form the modified polysulfone. All the particular embodiment disclosed above for the modified polysulfone in the polymeric membrane are particular embodiments of the process for its preparation.

In a particular embodiment of the process, the haloalkylating step is a chloromethylation step.

Polysulfone polymers are thermoplastic stable materials characterized by their strength and stiffness well-known in the art. The aromatic structure of this macromolecule is characterized by the presence of the sulfone groups ($-SO_2-$). Polysulfone (PSF) are well - known materials that are commercially available.

The polymeric membrane of the present invention may also be defined by its preparation process. Thus, it is considered part of the invention a polymeric membrane obtainable by the process defined above, including any of the particular embodiments disclosed above or below.

It is part of the present invention a process for capturing $CO_2$ comprising contacting an initial gas mixture comprising carbon dioxide in a concentration up to 80% by weight with a polymeric membrane as defined above, under conditions such as to obtain a gas product which has a higher weight percentage of $CO_2$ than the original gas mixture and permeates through the membrane, and a gas retentate which has a lower weight percentage of $CO_2$ than the original gas mixture which does not permeate through the membrane. In a particular embodiment, the initial gas mixture comprising carbon dioxide in a concentration ranging from 300 ppm to 80% by weight. In another particular embodiment, the initial gas mixture comprising carbon dioxide in a concentration ranging from 5 to 80% by weight. In a particular embodiment, the initial gas mixture comprising carbon dioxide in a concentration ranging 10 to 70% by weight.

In a particular embodiment, the initial gas mixture comprising $CO_2$ comes from oxycombustion effluents having a $CO_2$ concentration ranging from 60 to 80% by weight.

In another particular embodiment, the initial gas mixture comprising $CO_2$ comes from precombustion effluents such as biogas streams having a $CO_2$ concentration of ranging from 30 to 50% by weight.

In another particular embodiment, the initial gas mixture comprising $CO_2$ comes from direct air capture systems having a $CO_2$ concentration ranging from of 300 to 500 ppm.

In a particular embodiment, the initial gas mixture comprising $CO_2$ is flue gas having a $CO_2$ concentration ranging from 5 to 15% by weight. Combustion of fossil fuels is a common source of flue gas. They are usually combusted with ambient air, with the largest part of the flue gas from most fossil fuels combustion being nitrogen, carbon dioxide, and water vapor. The capture of $CO_2$ is conducted by permeating the $CO_2$ through the membrane while retaining $N_2$.

The use of a polymeric membrane as defined above to capture $CO_2$ is also part of the invention.

An equipment designed for gas separation comprising the polymeric membrane as defined above is also part of the invention. The membrane facilitates the separation process of a mixed gas comprising $CO_2$, allowing the $CO_2$ gas to permeate through it while retaining other components in the mixture.

The equipment for gas separation may be a gas separation device comprising: a) a membrane module comprising the polymeric membrane of the present invention; and optionally other module and/or components such as b) a feed gas inlet; b) permeate and retentate outlets; c) housing or casing; d) pressure control systems, e) flow controllers, f) valves, and g) support and spacer materials. The device may utilize a flat sheet or a hollow fiber membrane configuration.

In a particular embodiment, the device for gas capture is an electrochemical device containing electrodes for non-photoassisted reactions of $CO_2$ to other chemicals comprising the polymeric membrane of the invention. The membrane can be also used directly in a gas purification device to separate $CO_2$ from the gas mixture. This device consists of two chambers where the membrane is placed between them and works as permeable barrier. The $CO_2$ passes from a feed chamber containing gas mixture to the permeate chamber, while the rest of the gas components from the gas mixture leaves the system from the feed chamber as retentate.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim and shall not be construed as limiting the scope of the claim. Furthermore, the present invention covers all possible combinations of particular and preferred embodiments described herein.

Examples

Example 1: Chloromethylation of polysulfone (PSF-MeCl)

The synthesis of PSF-MeCl was performed accordingly to a previous paper (see A. Carbonell et al.: "Development of Polymeric Membranes Based on Quaternized Polysulfones for AMFC Applications" Polymers 2020, vol. 12, p.283). In detail, 10g of PSF (polysulfone, Formula Weight (FW) = 442.52, 22.6mmol) was dissolved in 250mL of dry Chloroform. 11.96 g of paraformaldehyde (396mmol) were added, and the reaction mixture stirred for 1h at RT, under $N_2$ atmosphere. Then dry $SnCl_4$ was added (0.92mL), at RT, and 50mL of trimethylchlorosilane (396mmol) dissolved in 50mL of $CHCl_3$ were added dropwise. When the addition is completed, the temperature was raised at 40°C, and the reaction leave under reflux under $N_2$ atmosphere for 24h. The crude was then added to methanol to obtain a white precipitate. The precipitate was filtered and washed with more MeOH and dried in the oven at 110°C for 24h to remove hexamethyldisiloxane, a by-product of the reaction.

Example 2: Preparation polysulfone-1-butyl- (PSF-$CH_2$-BIM)

5g of PSF-Me/Cl (FW=487.98, 0.01025mol, 5g) was dissolved in 100mL of DMF in a Three-neck Round-Bottom Flask. 7.634g of 1-Buthyllmidazole (FW=124.18, 0.0615mol, 8.08mL, d=0.945g/mL, 7.634g) was added. The reaction mixture was heated at 90°C, under N2 atmosphere for 72h. The crude was added to fresh acetonitrile to obtain a white solid, which was washed several times with ACN and water. The product was dried under vacuum until constant weight.

Example 3: Preparation of polysulfone-1-Octyl-Imidazole (PSF-$CH_2$-OIM)

5g of PSF-MeCl (FW=487.98, 0.01025mol, 5g) was dissolved in 100mL of DMF in a Three-neck Round-Bottom Flask. 11g of 1-Octyllmidazole (FW=180.29, 0.0615mol, d=0.91g/mL) was added. The reaction mixture was heated at 90°C, under $N_2$ atmosphere for 72h. The crude was added to fresh acetonitrile to obtain a white solid which was washed several times with ACN and water. The product was dried under vacuum until constant weight.

Example 4: Preparation of polysulfone-1-Octyl-1H-benzimidazole (PSF-$CH_2$-OBzIM)

5g of PSF-MeCl (FW=487.98, 0.01025mol, 5g) was dissolved in 100mL of DMF in a Three-neck Round-Bottom Flask. 14.16g of 1-Octyl-1H-benzimidazole (FW=230.349, 0.0614mol, 14.16mL, d=1.0 g/mL) was added. The reaction mixture was heated at 75°C, under $N_2$ atmosphere for 72h. The crude was added to fresh acetonitrile to obtain a white solid which was washed several times with ACN and water. The product was dried under vacuum until constant weight.

Example 5: Preparation of polysulfone-N-Buthyl-1H-benzimidazole (PSF-$CH_2$-BBzIM)

5g of PSF-MeCl (FW=487.98, 0.01025mol, 5g) was dissolved in 100mL of DMF in a Three-neck Round-Bottom Flask. 10.69 g of N-Buthyl-1H-benzimidazole (FW=174.24 g/mol, 0.0614mol) was added. The reaction mixture was heated at 75°C, under $N_2$ atmosphere for 72h. The crude was added to fresh acetonitrile to obtain a white solid, which was washed several times with ACN and water. The product was dried under vacuum until constant weight.

Example 6. Thermal gravimetric analysis (TGA) and Infrared (IR) spectroscopy

Thermal Gravimetric Analysis (TGA) was performed to assess polymer degradation. Table 1 lists the temperatures at which weight loss occurs and the degree of aromatic ring functionalization.

**Table 1.** Polymers weight loss temperature and percentage of the aromatic ring functionalization.

| Name | Imidazole pendant | $1^{st}$ weight loss (°C) | $2^{nd}$ weight loss (°C) | % of aromatic ring functionalized |
|---|---|---|---|---|
| *PSF* | - | - | 551 | - |
| *PSF-$CH_2$Cl* | - | 350-393 | 510 | 37% (Weight loss of 15 %wt.) |
| *PSF-BIM* | 1-Buthyllmidazole | 280.6 | 444 | 22% (Weight loss of 12 %wt.) |
| *PSF-OIM* | 1-Octhyllmidazole | 270-308 | 431.5 | 34% (Weight loss of 17 %wt.) |
| *PSF-OBzIM* | 1-Octyl-1H-benzimidazole | 270 | 420 | 30% (Weight loss of 18 %wt.) |

(continued)

| Name | Imidazole pendant | 1st weight loss (°C) | 2nd weight loss (°C) | % of aromatic ring functionalized |
|---|---|---|---|---|
| *PSF-BBzIM* | N-Buthyl-1H-benzimidazole | 283 | 415 | 20% (Weight loss of 11 %wt.) |

The analysis of evolved gas produced during the polymer's degradation using infrared were performed. Information both on the functionalization of the material and on their degradation mechanism was obtained.

The original thermal degradation of PSF shows only a single loss of weight step with a maximum degradation at 551 °C and a residue of about 30 wt. at 800 °C. The gasses developed are mainly $CO_2$, $SO_2$, methane, water. The residues of the aromatic rings and ether functionalities of the PSF backbone are evolved above 500°C due to the PSF full degradation. In particular, C-O-C band of the ether structure and C=C v band of the aromatic ring are present.

After PSF chloromethylation, a second degradation step appears, corresponding to the presence of methyl chloride functionalization. The degradation step at 178°C and 260°C instead corresponds to the presence of dimethylsiloxane and other siloxanes as impurities, which is evident from the EGA. In particular at 178°C there are two peaks at 1221 and 768 cm-1 (from 73°C to 288°C, max peak at 178°C) corresponding to Si-O and Si-O-Si respectively. This presence was avoided by adding a further step of purification in the standard synthesis of PSF chloromethylated, as by treatment with MeOH or by drying the polymer at 110°C overnight). Any remaining impurities were removed after the second reaction step. At 388°C up to 632°C, with a maximum peak at 512°C, the IR shows $SO_2$ gasses at 1377-1350 $cm^{-1}$. At about 383°C, the evidence of HCl generated by the chlorine of the chloromethyl was obtained. The presence of HCl probably trigger an earlier degradation of the main chain with evidence of $SO_2$ and chain break around 388 °C fair earlier than pure PSF. From this point, there are further degradation steps with the formation of CO, $CO_2$ and water, and evidence of benzene rings.

After the introduction of the imidazole pendant, two mainly degradation steps are present, one at 280°C corresponding to the presence of imidazole, and one at 444°C, corresponding to the final degradation of the polymer. From the first degradation step starting at 211 °C up to 383°C, we obtain the evidence of HCl generated by the chlorine of the chloromethyl, and the presence of NH from the imidazole functionality. The presence of HCl probably trigger an earlier degradation of the main chain with evidence of $SO_2$ and chain break around 380 °C fair earlier than pure PSF. From this point, there are further degradation steps with the formation of CO, $CO_2$, $SO_2$ and evidence of benzene rings.

From the EGA of PSF-OIM, the degradation steps of the polymer are reported. Firstly, $CO_2$ adsorbed by the polymer from the atmosphere is loose together with water. The evolution of $CO_2$ is again present above 400°C until the end of the degradation at 800°C. Above 300°C started the degradation of the imidazole pendant but in this region is also present HCl, which decrease already at 400°C. At 400°C started the evolution of $SO_2$ and above 500°C the evolution of CO. As for PSF-BIM, the evidence of the imidazole in the structure is confirmed.

The TGA-IR analysis of PSF-OBzIM , similarly to PSF-OIM, shows two mainly loss of weight step with a maximum degradation at about 420°C and a residue of about 30 wt. at 800 °C. The gasses developed strongly agreed with the polymer functionalization. At 208°C starting at 30°C up to 380°C, we identify $NH_3$ peak at 1077 $cm^{-1}$. At this temperature, the IR shows C-N stretching vibrations at 1400 $cm^{-1}$. At 87°C up to 370°C, with a maximum peak at 221°C, it shows C=C and C=N stretching vibrations peak at about 1650 $cm^{-1}$, coming from the imidazole pendant, which is probably one of the first functionality, together with HCl, to leave the main structure of the polymer. Starting from 183°C, until 408°C, with a maximum peak at 288°C, it is proven the degradation of both imidazole and the main chain of the PSF (e.g. benzene). In particular at this degradation temperature are present 2868, 2935, 2966 $cm^{-1}$ peaks corresponding to alkane C-H stretching vibrations of both benzene and aliphatic alkane chain of the imidazole pendant and, and C-H sym and asym stretching vibrations ($-CH_2$-N-C). Finally, at 427°C we have the evidence of $SO_2$ presence (1338, 1357, 1375 $cm^{-1}$), starting from183°C, up to 613°C. From the GEA the other gasses evolved during degradation are $CO_2$, CO, methane and water.

The TGA-IR analysis of PSF- BBzIM , similarly to the other functionalized PSF, shows two mainly loss of weight step with a maximum degradation at about 415°C and a residue of about 30 wt. at 800 °C.

The first gasses evolved from the degradation of the polymer are CO2 (absorbed from the air), fragments of the degradation of the imidazole and water. In fact, at 255°C starting at 30°C up to 356°C, the IR shows $NH_3$ peak at 1077 $cm^{-1}$. Also, between 150°C up to 384°C, with a maximum peak at 255°C, it shows C=C and C=N stretching vibrations peak at about 1700-1650 $cm^{-1}$, coming from the imidazole pendant, which is probably one of the first functionality, together with HCl, leaving the main structure of the polymer. Starting from 208°C until 384°C, with a maximum peak at 288°C, the degradation of both imidazole and the main chain of the PSF (e.g. benzene) is proven. In fact, above 288°C we start to see the alkane C-H stretching vibrations bands corresponding to 2868, 2935, 2966 $cm^{-1}$ of both benzene and aliphatic alkane chain of the imidazole pendant and C-H sym and asym stretching vibrations bands ($-CH_2$-N-C). At 422°C there is evidence of $SO_2$ gasses (1338, 1357, 1375 $cm^{-1}$), starting from 217°C, up to 622°C. Finally, $CH_4$ start to be evolved firstly between

222°C and 370°C, later between 403°C till the end of the measurement at 800°C, with a maximum evolution peak at 589°C.

Example 7: Preparation of polymeric membranes according to the invention

Membranes were prepared by phase inversion process, namely by solvent evaporation. First polysulfone, new synthesized polymers and ILs (if added) were dissolved in chloroform during 24h, maintaining the solids to solvent ratio 1g to 4 ml. Composition of each polymeric solution used is listed in the table 2. Obtained polymeric solutions were further cast on a glass support and left in the fume hood for complete evaporation.

Table 2.Polymeric solution composition

| Membrane | Modified polysulfone | Amount of modified polysulfone [g] | IL ([BMiM] [SuC C]) mass [g] | Polysulfone mass [g] | Chloroform volume [ml] |
|---|---|---|---|---|---|
| M-PSF | - | - | - | 1 | 4 |
| M-PSF-IL | - | - | 0.2 | 0.8 | 4 |
| M-PSF-IL-PSF-BIM | PSF-BIM | 0.2 | 0.2 | 0.6 | 4 |
| M-PSF-IL-PSF-OIM | PSF-OIM | 0.2 | 0.2 | 0.6 | 4 |
| M-PSF-IL-PSF-OBzIM | PSF-OBzIM | 0.2 | 0.2 | 0.6 | 4 |
| M-PSF-IL-PSF-BBzIM | PSF-BBzIM | 0.2 | 0.2 | 0.6 | 4 |

Example 8: Determination of the efficiency of the membrane to capture $CO_2$

To evaluate the efficiency of membranes in capturing $CO_2$, specific procedures and regulations were followed, utilizing a Dynamic Vapor Sorption (DVS) instrument. The experimental approach and findings are detailed below.

Pure $CO_2$ absorption-desorption measurements on polymers were performed using a DVS instrument. The pure $CO_2$ isotherms were carried out at a constant temperature of 30 °C while increasing the pressure up to 0.8 bar (20% of p/p0 increase at each step). The equilibrium criterion condition for each step was chosen as dm/dt = 0.001% $min^{-1}$.

Pure $N_2$ and $CO_2$ absorption-desorption measurements on membranes were performed using a Surface Measurement System, Dynamic Vapor Sorption (DVS) instrument. The pure $N_2$ and $CO_2$ isotherms were carried out at a constant temperature of 30 °C while increasing the pressure up to 0.8 bar (5-10% of p/p0 increase at each step). The equilibrium criterion condition for each step was chosen as dm/dt = 0.001% $min^{-1}$.

Gas permeation characteristics of PIM-1 based blends were studies, especially their permeance and selectivity was evaluated being the main factor that indicate their overall efficiency in gas separation technology. The measurements were performed using a Dynamic Vapor Sorption (DVS) instrument following the method previously described. If the diffusion process obeys Fick's law and the down-stream pressure is much less than the up-stream pressure, the permeability P of the membranes, expressed in Barrer (see S. A. Stern, "The 'barrer' permeability unit," J. Polym. Sci. Part A-2 Polym. Phys.,1968, vol. 6, no. 11, pp. 1933-1934, is given by (1)

$$PA = DA \times SA \qquad (1)$$

where DA is the average diffusion coefficient, and SA is the solubility of penetrant A in the polymer.

The Barrer (H) is currently the most widely used unit for gas separation and it is defined as ($10^{-10}$ $cm^3$ (STP) cm/($cm^2$ s cmHg)) where STP stands for standard temperature and pressure (0°C and 1 atm).

The term $cm^3$ (STP) /$cm^2$ s refers to the volumetric trans-membrane flux of the diffusing species in terms of standard conditions of 0°C and 1 atm, the term cm refers to the membrane thickness, and cmHg refers to the trans-membrane partial pressure driving force for the diffusing species.

The selectivity of a membrane for gas A over gas B is the ratio of their pure gas permeabilities (or permeances): $\alpha$A/B = PA/PB = (DA/DB) x (SA/SB) where DA/DB is the diffusivity selectivity, and SA/SB is the solubility selectivity (see H. Lin et al., "CO2-selective membranes for hydrogen production and CO2 capture - Part I: Membrane development," J. Memb. Sci., 2014, vol. 457, pp. 149-161; J. G. Wijmans et al., "The solution-diffusion model: a review," J. Memb. Sci., 1995, vol. 107, no. 1-2, pp. 1-21).

Therefore, diffusion coefficient (D) and solubility (S) were calculated for all membranes for $CO_2$ and $N_2$ gases to finally find the selectivity and permeability of the new prepared gas separation membranes. Diffusion and solubility

measurements were performed at for four partial gas pressure (0.2, 0.4, 0.6, 0.8 Bar) at 40°C. In particular the diffusion coefficient ($cm^2/s$) was extrapolated from the experimental data following the Crank and Park eqn. (2)

$$Mt/M\infty=4/l \sqrt{((Dxt)/\pi)} \quad (2)$$

where Mt is the ansorbed amount at time t, M∞ is the absorbed amount at equilibrium, l is the film tickness and D the diffusion coefficient ($cm^2/s$). The solubility ($cm^3$(STP)/$cm^3$ cm Hg) indicates the amount of gas solubilize in the membranes.

Membrane permeability

Pure $CO_2$ absorption measurements were conducted on PSF-modified polymers at 30°C up to 0.9Bar. A significant improvement in $CO_2$ permeability was observed in the membranes compared to pure PSF-membrane. For instance, the $CO_2$ permeability for M-PSF/IL/PSF-OIM showed a massive increase of 16000 fold compared to M-PSF at 0.8 bar, jumping from 0.018 to 290 Barrer (Table 3). This indicates a substantial enhancement in the ability of the membrane to allow $CO_2$ to pass through it.

Table 3. $CO_2$ and $N_2$ Permeability (Barrer) of membranes at 30°C.

| Gas | Pressure (Bar) | M-PSF (Barrer) | M-PSF/IL (Barrer) | M-PSF/IL/ PSF-BIM (Barrer) | M-PSF/IL/ PSF-OIM (Barrer) | M-PSF/IL/ OBzIM (Barrer) | M-PSF/IL/ BBzIM (Barrer) |
|---|---|---|---|---|---|---|---|
| $CO_2$ | 0.8 | 91.0 | 22.5 | 175.3 | 290.4 | 89.7 | 181.0 |
| | 0.6 | 48.3 | 16.6 | 127.2 | 275.9 | 76.6 | 194.0 |
| | 0.4 | 34.4 | 12.3 | 102.1 | 203.4 | 71.5 | 176.0 |
| | 0.2 | 27.9 | 5.8 | 71.1 | 160.8 | 62.7 | 147.0 |
| $N_2$ | 0.8 | Not detectable | 62.4 | 40.6 | 54.9 | 114.3 | 58.2 |
| | 0.6 | 154.5 | Not detectable | 20.9 | 60.3 | 81.7 | 29.2 |
| | 0.4 | 52.3 | Not detectable | 11.4 | 25.9 | 38.9 | 14.4 |
| | 0.2 | 65.9 | Not detectable | 5.6 | 12.2 | 8.3 | 7.4 |

Membrane solubility

The solubility of $CO_2$ in the polymers ranged from 0.07 - 0.13 $CO_2$ wt.%. The data from these experiments can be found in Table 4.

Table 4. $CO_2$ and $N_2$ Solubility of membranes at 30°C. Solubility of the membranes in this table is expressed as ($cm^3$ (STP)/$cm^3$ cmHg).

| Membrane | | | | | | | |
|---|---|---|---|---|---|---|---|
| Gas | Pressure (Bar) | *M-PSF* | *M-PSF/IL* | *M-PSF/IL/ PSF-BIM* | *M-PSF/IL/ PSF-OIM* | *M-PSF/IL /OBzIM* | *M-PSF/IL/ BBzIM* |
| *$CO_2$* | *0.8* | 0.019 | 0.091 | 0.147 | 0.119 | 0.122 | 0.108 |
| | *0.6* | 0.021 | 0.093 | 0.167 | 0.135 | 0.142 | 0.128 |
| | *0.4* | 0.023 | 0.095 | 0.188 | 0.150 | 0.169 | 0.154 |
| | *0.2* | 0.027 | 0.085 | 0.179 | 0.160 | 0.203 | 0.174 |
| *$N_2$* | *0.8* | 0.003 | 0.060 | 0.027 | 0.011 | 0.024 | 0.013 |
| | *0.6* | 0.004 | 0.027 | 0.033 | 0.013 | 0.028 | 0.018 |
| | *0.4* | 0.005 | 0.015 | 0.038 | 0.015 | 0.031 | 0.025 |
| | *0.2* | 0.007 | 0.005 | 0.039 | 0.015 | 0.024 | 0.011 |

Membrane selectivity

Selectivity was another crucial factor assessed. The experiments showed an increase in $CO_2/N_2$ selectivity by up to 17% at 0.2 bar. This improvement in selectivity is significant as it indicates the membrane's enhanced ability to distinguish and separate CO2 from other gases like nitrogen.

The results of these experiments, particularly the high values for permeability and selectivity, demonstrate the potential of these membranes for industrial-scale $CO_2$ separation. These findings are further corroborated by comparisons with previously reported PSF-based membranes in the literature.

Table 5. $CO_2/N_2$ Selectivity ($\alpha$) of membranes at 30°C.

| Gas | Pressure (Bar) | *M-PS F* ($\alpha$) | *M-PSF/I L* ($\alpha$) | *M-PSF/IL/P SF-BIM* ($\alpha$) | *M-PSF/IL/P SF-OIM* ($\alpha$) | *M-PSF/IL/OB zIM* ($\alpha$) | *M-PSF/IL/BBz IM* ($\alpha$) |
|---|---|---|---|---|---|---|---|
| *$CO_2$ /$N_2$* | *0.8* | - | 0.33 | 4.29 | 5.26 | 1.15 | 1.58 |
| | *0.6* | 0.31 | - | 6.04 | 4.55 | 1.93 | 2.36 |
| | *0.4* | 0.65 | - | 8.86 | 7.81 | 3.70 | 4.50 |
| | *0.2* | 0.42 | - | 12.58 | 13.14 | 10.45 | 17.51 |

Example 9: Stability assay of a polymeric membrane according to the invention

All membranes in this study were prepared using the same total polymer concentration (20wt%) and solvent (Dimethylformamide, DMF), differing only in the ratios of unmodified polysulfone to chemically modified polysulfone (PSF-CH2-IM).

| | Comparative example | Example of the invention | Comparative example |
|---|---|---|---|
| Ratio unmodified/modified polysulfone | 0:1 | 3:1 | 1:3 |
| Total polymer concentration | 20wt% | 20wt% | 20wt% |
| Solvent | DMF | DMF | DMF |
| PSF-CH2-IM concentration | 100wt% | 25wt% | 75wt% |
| Polysulfone concentration | 0wt% | 75wt% | 25wt% |

The experiment's findings (See FIG. 1) demonstrate that maintaining a 3:1 ratio of unmodified to modified polysulfone results in excellent mechanical stability, whereas a 1:3 ratio leads to reduced stability, resulting in membrane breakdown.

**Citation List**

Patent Literature

**[0092]** - KR20140100048A

Non Patent Literature

- D. Huguet et al.; , "Supported Imidazolium Based Ionic Liquids on a Polysulfone Matrix for Enhanced CO2 Capture",

Polymers 2022, vol. 14, p. 4865

- A. Carbonell et al.: "Development of Polymeric Membranes Based on Quaternized Polysulfones for AMFC Applications" Polymers 2020, vol. 12, p.283
- S. A. Stern, "The 'barrer' permeability unit," J. Polym. Sci. Part A-2 Polym. Phys., 1968, vol. 6, no. 11, pp. 1933-1934
- H. Lin et al., "CO2-selective membranes for hydrogen production and CO2 capture - Part I: Membrane development," J. Memb. Sci., 2014, vol. 457, pp. 149-161
- J. G. Wijmans et al., "The solution-diffusion model: a review," J. Memb. Sci., 1995, vol. 107, no. 1-2, pp. 1-21

## Claims

**1.** A polymeric membrane comprising:

a) an ionic liquid of formula [A][X] wherein: the cation [A] is selected from the group consisting of imidazolium, ($C_1$-$C_{20}$)-alkyl imidazolium, benzimidazolium, ($C_1$-$C_{20}$)-alkyl benzimidazolium, triazolium, ($C_1$-$C_{20}$)-alkyl triazolium, benzotriazolium, tetrazolium, ($C_1$-$C_{20}$)-alkyl tetrazolium, and benzotetrazolium; and the anion [X] is selected from the group consisting of succinimidate, phthalimidate, maleimidate, saccharinate, glutarimidate, halogen, ($C_1$-$C_{20}$)-alkanoate, argininate, lysinate, histidinate, dicyanamide, tricyanomethide, bis (perfluoroalkylsulfonyl)imide, formiate, pyvalate, benzoate, prolinate, imidazolate, mesylate, triflate, oxalate, malonate, succinate, hexafluorophosphate, bis(trifluoromethylsulfonyl)imide, tetrafluoroborate, trifluoromethanesulfonate, dicyanamide, methyl sulfate, dimethyl phosphate, and acetate; and
b) a combination of unmodified polysulfone and a modified polysulfone;

wherein:

the modified polysulfone is a polysulfone functionalized with at least a cation of an ionic liquid chemically bonded into a side chain of the polysulfone;
the cation of the ionic liquid is independently selected from the group consisting of imidazolium, ($C_1$-$C_{20}$)-alkyl imidazolium, benzimidazolium, ($C_1$-$C_{20}$)-alkyl benzimidazolium, triazole, ($C_1$-$C_{20}$)-alkyl triazolium, benzotriazolium, tetrazolium, ($C_1$-$C_{20}$)-alkyl tetrazolium,
and benzotetrazolium, and having an anion [Y] which is independently selected from the group consisting of succinimidate, phthalimidate, maleimidate, saccharinate, glutarimidate, halogen, ($C_1$-$C_{20}$)-alkanoate, argininate, lysinate, histidinate, dicyanamide, tricyanomethide, bis (perfluoroalkylsulfonyl)imide, formiate, pyvalate, benzoate, prolinate, imidazolate, mesylate, triflate, oxalate, malonate, succinate, hexafluorophosphate, bis(trifluoromethylsulfonyl)imide, tetrafluoroborate, trifluoromethanesulfonate, dicyanamide, methyl sulfate, dimethyl phosphate, and acetate; and
the unmodified polysulfone and the modified polysulfone are in a weight ratio from 10:1 to 1:1 in the polymeric membrane.

**2.** The polymeric membrane according to claim 1, wherein the cation of the ionic liquid chemically bonded to the polysulfone is selected from a ($C_1$-$C_{20}$)-alkyl imidazolium, and a ($C_1$-$C_{20}$)-alkyl benzimidazolium.

**3.** The polymeric membrane according to any of the claims 1-2, wherein the cation of the ionic liquid bonded to the polysulfone is selected from the group consisting of 1-butylimidazolium, 1-octylimidazolium, 1-octyl-1H-benzimidazolium, and N-butyl-1H-benzimidazolium.

**4.** The polymeric membrane according to any of the claims 1-3, wherein the unmodified polysulfone has an average molecular weight from 20.000 to 60.000 measured by gel permeation chromatography (GPC) together with mass spectrometry (MALDI TOF-MS).

**5.** The polymeric membrane according claim 4, wherein the unmodified polysulfone comprises the following polymeric unit:

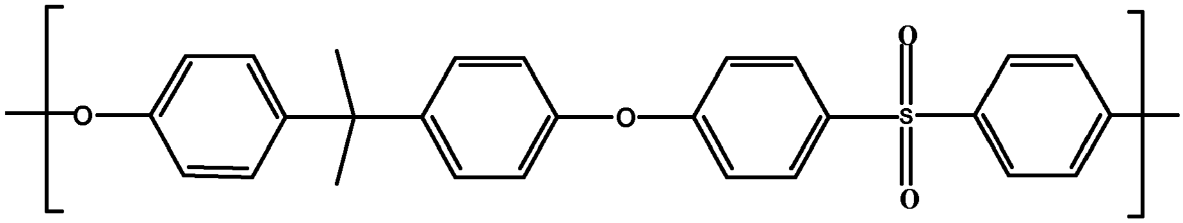

6. The polymeric membrane according to any of the claims 1-5, wherein the modified polysulfone comprises the following polymeric unit:

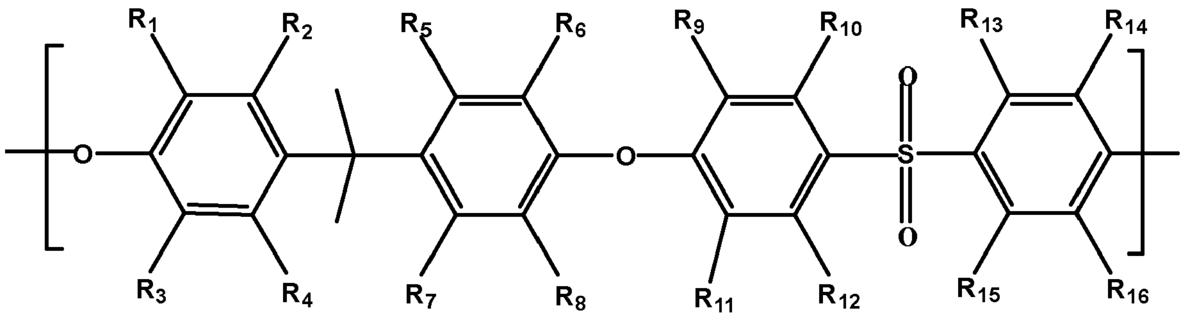

wherein

$R_1$ -$R_{16}$ are independently selected from H and -$(CH_2)_m$-$R_{17}$ with the proviso that at least one $R_1$ -$R_{16}$ is -$(CH_2)_m$-$R_{17}{}^{+}Y$;
m is an integer from 1 to 2;
$R_{17}{}^{+}$ is the cation of the ionic liquid which is chemically bonded into the side chain of the polysulfone through the -$(CH_2)_m$ and which is independently selected from the group consisting of imidazolium, ($C_1$-$C_{20}$)-alkyl imidazolium, benzimidazolium, ($C_1$-$C_{20}$)-alkyl benzimidazolium, triazolium, ($C_1$-$C_{20}$)-alkyl triazolium, benzotriazolium, tetrazolium, ($C_1$-$C_{20}$)-alkyl tetrazolium, and benzotetrazolium, and
$Y^-$ is the anion which is independently selected from the group consisting of a succinimidate, halogen, ($C_1$-$C_4$)-alkanoate, prolinate, and malonate.

7. The polymeric membrane according to any of the claims 1-6, wherein the ionic liquid is in an amount from 5 to 45 wt.%, based on the total weight of the polymeric membrane; where the amount of the ionic liquid; and of the combination of unmodified polysulfone and a modified polysulfone sum 100%.

8. The polymeric membrane according to any of the claims 1-7, wherein the unmodified polysulfone/ modified polysulfone/ ionic liquid are in a weight ratio from 6:1:1 to 2:1:1 in the polymeric membrane.

9. The polymeric membrane according to any of the claims 1-8, which has a $CO_2$ permeability from 5 to 350 Barrer (x10 $^{-10}$ $cm^3$ (STP) cm/($cm^2$ s cmHg)) analyzed at 30°C, with a pressure between 0.2 to 0.8 bar and using a microbalance system.

10. The polymeric membrane according to any of the claims 1-8, which has a solubility in $CO_2$ from 0.015 to 0.250 ($cm^3$ (STP)/$cm^3$ cmHg) analyzed at 30°C, with pressure between 0.2 to 0.8 bar and using a microbalance system.

11. A process for preparing the polymeric membrane as defined in any of the claims 1-10, comprising the following steps:

a) Preparing a polymeric solution comprising: an unmodified polysulfone, a modified polysulfone, an ionic liquid, each of them as defined in any of the claims 1-10, and a solvent;
b) Casting the solution over a support which is selected from the group consisting of glass support, and teflon sheet; and
c) Evaporating the solvent, thereby forming a thin film over the support.

12. The process according to claim 11, wherein the process comprises preparing the modified polysulfone by a process

comprising:

a) haloalkylating an unmodified polysulfone; and
b) reacting the polysulfone obtained in step a) with an liquid ionic of formula [A'][Y] wherein: the cation [A'] is independently selected from the group consisting of imidazolium, ($C_1$-$C_{20}$)-alkyl imidazolium, benzimidazolium, ($C_1$-$C_{20}$)-alkyl benzimidazolium, triazolium, ($C_1$-$C_{20}$)-alkyl triazolium, benzotriazolium, tetrazolium, ($C_1$-$C_{20}$)-alkyl tetrazolium, and benzotetrazolium; and the anion [Y] is independently selected from the group consisting of succinimidate, halogen, ($C_1$-$C_4$)-alkanoate, prolinate, and malonate, to form the modified polysulfone.

**13.** A process for capturing $CO_2$ comprising contacting an initial gas mixture comprising carbon dioxide in a concentration up to 80% by weight with a polymeric membrane as defined in any of the claims 1-10, under conditions such as to obtain a gas product which has a higher weight percentage of $CO_2$ than the original gas mixture and permeates through the membrane, and a gas retentate which has a lower weight percentage of $CO_2$ than the original mixture, which does not permeate through the membrane.

**14.** Use of a polymeric membrane as defined in any of the claims 1-10, to capture $CO_2$.

**15.** A device for gas separation comprising the polymeric membrane as defined in any of the claims 1-10.

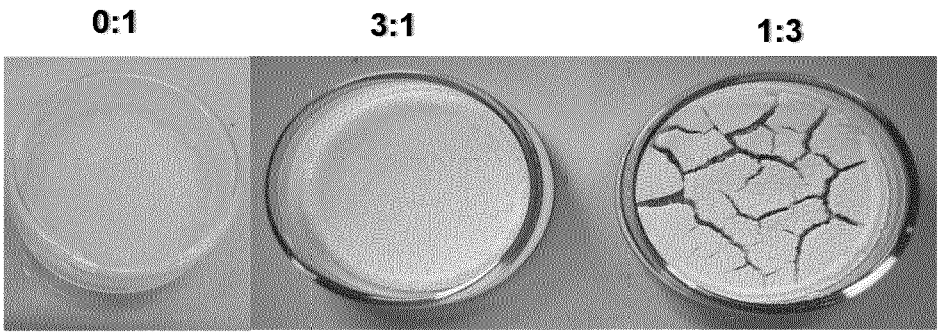


FIG. 1

Europäisches Patentamt
European Patent Office
Office européen des brevets

# EUROPEAN SEARCH REPORT

Application Number
EP 24 38 2242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | IN 2019 2103 8111 A (PARAG RAMESH NEMADE) 26 March 2021 (2021-03-26)<br>* abstract *<br>* page 2, lines 15-16 *<br>* page 6, lines 111-118 *<br>* page 5, lines 96-97 *<br>----- | 1-15 | INV.<br>B01D71/68<br>B01D53/22<br>B01D71/82 |
| Y | KR 2014 0100048 A (UNIV INCHEON IND ACAD COOP [KR]; NAT UNIV GYEONGSANG IACF [KR]) 14 August 2014 (2014-08-14)<br>* paragraph [0001]; claims *<br>----- | 1-15 | |
| Y | LU SOON-CHIEN ET AL: "Polysulfone-ionic liquid based membranes for CO2/N2separation with tunable porous surface features",<br>JOURNAL OF MEMBRANE SCIENCE, ELSEVIER BV, NL,<br>vol. 518, 28 June 2016 (2016-06-28), pages 10-20, XP029684552,<br>ISSN: 0376-7388, DOI: 10.1016/J.MEMSCI.2016.06.031<br>* abstract *<br>* paragraph [02.1]; table 2 *<br>----- | 1-15 | TECHNICAL FIELDS SEARCHED (IPC)<br>B01D |
| Y | FARROKHARA MOHADESEH ET AL: "New high permeable polysulfone/ionic liquid membrane for gas separation",<br>CHINESE JOURNAL OF CHEMICAL ENGINEERING, CHEMICAL INDUSTRY PRESS, BEIJING, CN,<br>vol. 28, no. 9, 18 April 2020 (2020-04-18), pages 2301-2311, XP086282534,<br>ISSN: 1004-9541, DOI: 10.1016/J.CJCHE.2020.04.002<br>[retrieved on 2020-04-18]<br>* abstract *<br>* paragraph [02.2] *<br>* page 2302, left-hand column *<br>----- | 1-15 | |

The present search report has been drawn up for all claims

2

| Place of search | Date of completion of the search | Examiner |
|---|---|---|
| Munich | 16 July 2024 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 38 2242

This annex lists the patent family members relating to the patent documents cited in the above-mentioned European search report. The members are as contained in the European Patent Office EDP file on
The European Patent Office is in no way liable for these particulars which are merely given for the purpose of information.

16-07-2024

| Patent document cited in search report | Publication date | Patent family member(s) | Publication date |
|---|---|---|---|
| IN 201921038111 A | 26-03-2021 | | |
| KR 20140100048 A | 14-08-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20140100048 A
- KR 20140100048


### Non-patent literature cited in the description


- **D. HUGUET et al.** Supported Imidazolium Based Ionic Liquids on a Polysulfone Matrix for Enhanced $CO_2$ Capture. *Polymers*, 2022, vol. 14, 4865
- **A. CARBONELL et al.** Development of Polymeric Membranes Based on Quaternized Polysulfones for AMFC Applications. *Polymers*, 2020, vol. 12, 283
- **S. A. STERN**. The 'barrer' permeability unit. *J. Polym. Sci. Part A-2 Polym. Phys*, 1968, vol. 6 (11), 1933-1934
- **H. LIN et al.** $CO_2$-selective membranes for hydrogen production and $CO_2$ capture - Part I: Membrane development. *J. Memb. Sci.*, 2014, vol. 457, 149-161
- **J. G. WIJMANS et al.** The solution-diffusion model: a review. *J. Memb. Sci.*, 1995, vol. 107, 1-21
- **S. A. STERN**. The 'barrer' permeability unit. *J. Polym. Sci. Part A-2 Polym. Phys.*, 1968, vol. 6 (11), 1933-1934
- **J. G. WIJMANS et al.** The solution-diffusion model: a review. *J. Memb. Sci.*, 1995, vol. 107 (1-2), 1-21